# FASCICULE DE BREVET EUROPEEN

(11) **EP 0 848 479 B1**
(45) Date de publication et mention de la délivrance du brevet: **02.10.2002**
(21) Numéro de dépôt: 97121210.5
(22) Date de dépôt: 03.12.1997
(51) Int. Cl.: H02K 11/04, H02K 5/20

(54) **Alternateur de véhicule automobile comportant un palier arrière refroidi par eau**
Automobil-Kraftfahrzeug-Generator mit einem wassergekühlten Hinterlager
Alternator of an automobile vehicle comprising a water cooled rear bearing

(30) Priorité: 16.12.1996 FR 9615544
(43) Date de publication de la demande: 17.06.1998
(73) Titulaire: VALEO EQUIPEMENTS ELECTRIQUES MOTEUR, 94000 Créteil (FR)
(72) Inventeur: Chaudoreille, Alain, 75020 Paris (FR); Le Douarin, Michel, 92330 Sceaux (FR)
(74) Mandataire: Gamonal, Didier

(56) Documents cités:
- EP-A- 0 480 484
- FR-A- 2 667 738
- GB-A- 2 217 923

## Description

L'invention concerne un alternateur de véhicule automobile comportant un palier arrière refroidi par eau.

L'invention concerne plus particulièrement un alternateur à refroidissement liquide, du type comportant un carter dont une extrémité axiale est fermée par un palier arrière qui porte des moyens de régulation du courant produit par l'alternateur, et du type dans lequel le palier comporte une cavité interne dans laquelle circule un liquide de refroidissement. (voir FR-A-2 667 738 et GB-A-2 217 923).

Il est connu d'utiliser une circulation de liquide de refroidissement à l'intérieur d'une cavité soit du carter, soit d'un palier de l'alternateur afin de refroidir celui-ci d'une manière efficace, ce qui permet d'augmenter le rendement et la compacité d'une telle machine. Par ailleurs, par rapport à une ventilation par circuit d'air, le refroidissement par circulation de liquide se révèle beaucoup plus silencieux.

L'utilisation d'un circuit de refroidissement liquide de l'alternateur est donc particulièrement intéressante dans le cadre actuel d'une augmentation incessante de la consommation en énergie électrique des véhicules automobiles qui est liée à l'accroissement du nombre d'équipements munis d'un moteur électrique.

L'augmentation du courant produit par l'alternateur conduit donc à une adaptation correspondante des moyens de régulation du courant, et notamment des moyens qui permettent de redresser le courant alternatif triphasé produit par l'alternateur, en un courant continu susceptible d'être stocké dans une batterie d'accumulateurs ou d'être directement utilisé par le circuit électrique du véhicule qui est sous tension continue.

Le redressement du courant alternatif triphasé fait généralement appel à un pont à six diodes de puissance. Trois de ces diodes sont dites diodes positives et sont agencées entre la sortie des bobinages statoriques et la borne B+ de l'alternateur qui est reliée à la batterie et au circuit électrique du véhicule. Trois autres de ces diodes, qui sont dites diodes négatives, sont agencées entre la masse électrique du véhicule et l'entrée des bobinages statoriques.

Les diodes formant le pont de redressement étant soumises à des courants d'intensité croissante, il est nécessaire d'en assurer un refroidissement le plus efficace possible.

Dans ce but, il est connu de disposer les diodes sur des plaques métalliques qui sont agencées à l'extérieur de l'alternateur et qui forment un dissipateur d'énergie calorifique. Les diodes sont alors regroupées sur deux plaques, l'une réservée aux diodes positives, l'autre étant réservée aux diodes négatives.

Toutefois, dans certaines conditions de fonctionnement particulièrement sévères, il est apparu qu'en particulier ce refroidissement des diodes et d'une manière plus générale que le refroidissement de l'ensemble de moyens de régulation était insuffisant pour assurer un bon rendement de l'alternateur.

Aussi, dans le but d'améliorer le refroidissement des composants formant les moyens de régulation du courant produit par l'alternateur, l'invention propose un alternateur à refroidissement liquide, du type comportant un carter dont une extrémité axiale est fermée par un palier arrière qui porte des moyens de régulation du courant produit par l'alternateur, et du type dans lequel le palier comporte une cavité interne dans laquelle circule un liquide de refroidissement, caractérisé en ce que le palier comporte au moins une cheminée qui débouche axialement de part et d'autre du palier et qui traverse la cavité interne de telle sorte qu'une face externe d'une paroi latérale de la cheminée est au contact du liquide de refroidissement, et en ce que les moyens de régulation comportent au moins un composant qui est agencé à l'intérieur de la cheminée.

Selon d'autres caractéristiques de l'invention :
- le composant comporte un boîtier qui est monté au contact d'une face interne de la paroi latérale de la cheminée ;
- le composant est agencé sensiblement au niveau d'une face transversale interne du palier, et il comporte un élément de raccordement qui s'étend axialement à l'intérieur de la cheminée et qui débouche du côté d'une face transversale externe du palier pour permettre le raccordement du composant aux autres moyens de régulation ;
- l'extrémité axiale de la cheminée qui débouche dans la face interne du palier est élargie pour recevoir le boîtier du composant ;
- la cavité interne forme un canal dont les deux extrémités forment respectivement l'entrée et la sortie du liquide de refroidissement qui circule dans la cavité, et la cheminée est agencée en travers du trajet du liquide dans la cavité ;
- le palier comporte un corps principal dans lequel sont agencés la cavité et la cheminée, et un couvercle qui referme la cavité et qui comporte des orifices de passage formant une extrémité axiale de la cheminée ;
- le couvercle est agencé du côté externe du palier par rapport au carter de l'alternateur ;
- le palier est réalisé en une seule pièce par moulage ;
- le palier comporte des ouïes qui permettent une circulation d'air entre l'intérieur et l'extérieur de l'alternateur.

D'autres avantages de l'invention apparaîtront à la lecture de la description détaillée qui suit pour la compréhension de laquelle on se reportera aux dessins annexés dans lesquels :
- la figure 1 est une vue en perspective éclatée d'un palier conforme aux enseignements de l'invention ;
- la figure 2 est une vue en coupe axiale suivant la ligne 2-2 de la figure 3 du palier de la figure 1 monté sur un alternateur et comportant, sur une face externe, un dissipateur pour un pont de redressement ;
- la figure 3 est une vue axiale en plan de la face externe du corps principal du palier dans laquelle est aménagée la cavité ;
- la figure 4 est une vue en coupe longitudinale du corps principal du palier ;

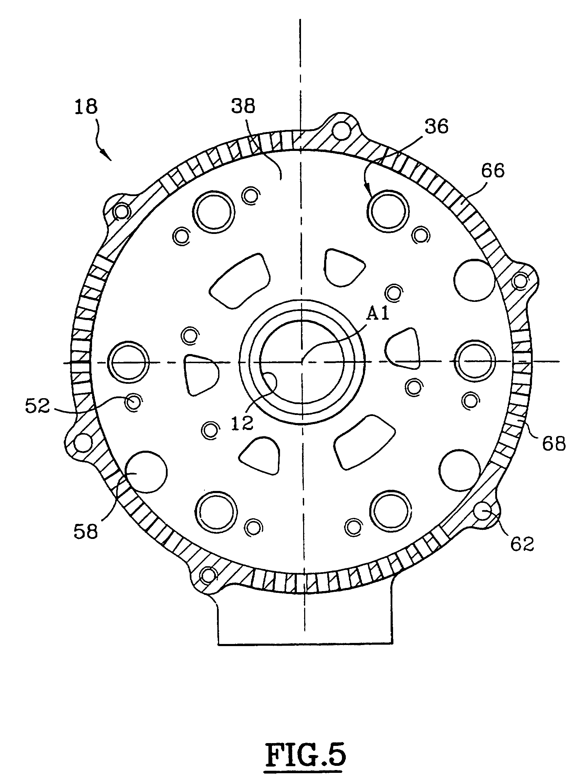

- la figure 5 est une vue en coupe selon la ligne 5-5 de la figure 4 ; et
- la figure 6 est une vue axiale en plan de la face interne du couvercle du palier qui est destinée à refermer la cavité.

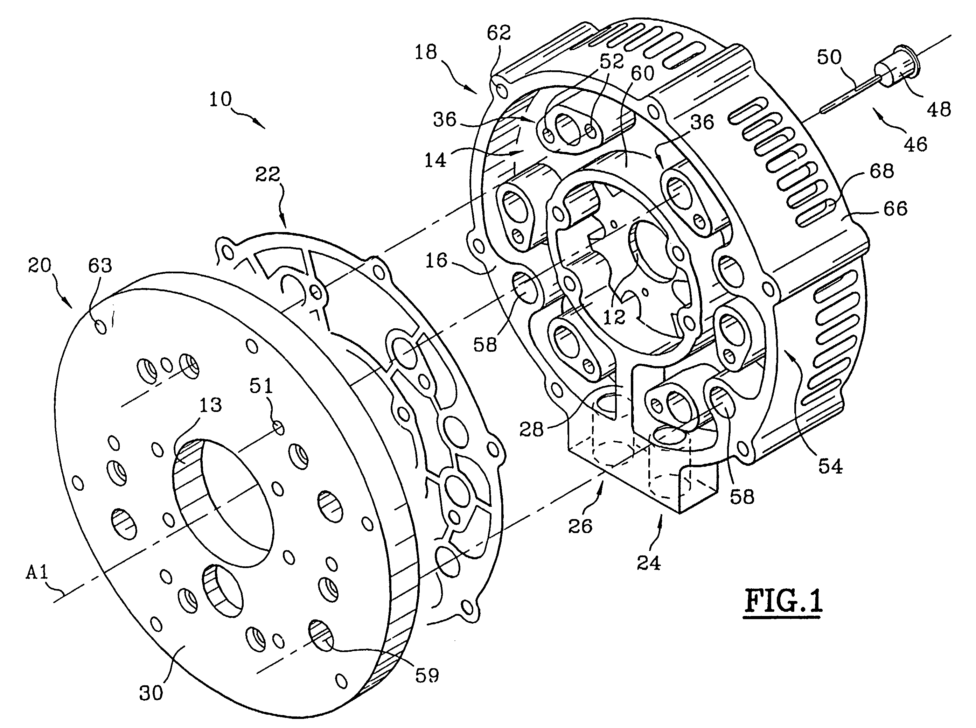

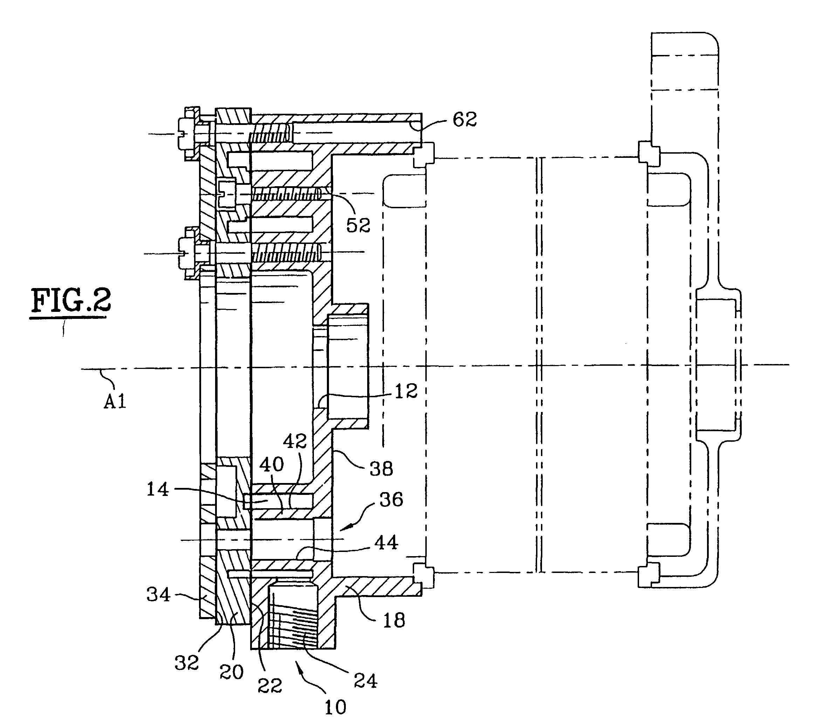

On a représenté sur la figure 1 un palier 10 destiné à être fixé à une extrémité axiale arrière d'un alternateur de véhicule automobile qui est illustré en traits mixtes à la figure 2.

Le palier 10 est destiné à refermer à l'arrière le carter de l'alternateur et il forme un guidage pour un arbre de rotor (non représenté) d'axe A1 de l'alternateur qui le traverse par un orifice central 12.

Le palier 10 selon l'invention comporte une cavité interne 14 qui est aménagée dans la face externe 16 d'un corps principal 18 du palier 10 et qui est destinée à être refermée par un couvercle 20 avec interposition d'un joint d'étanchéité 22.

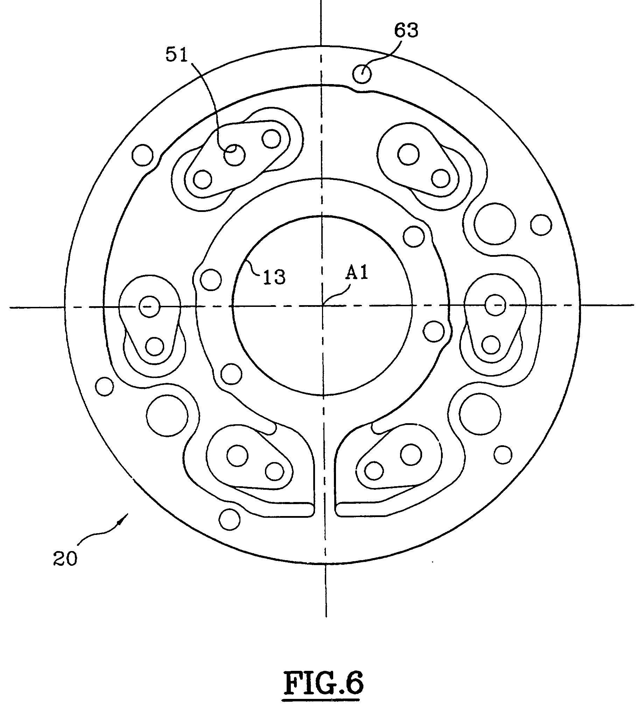

On a représenté sur la figure 6 la face interne du couvercle 20 qui referme la cavité 14 et sur laquelle porte le joint 22. Le couvercle 20 se présente sensiblement sous la forme d'une plaque annulaire dont l'ouverture centrale 13 laisse accès à l'orifice central 12 du palier 10.

La cavité 14 s'étend pour l'essentiel à la périphérie du palier 10 et le corps principal 18 comporte une entrée d'alimentation 24 et une sortie d'évacuation 26 qui permettent de faire circuler le liquide de refroidissement à l'intérieur de la cavité 14.

La cavité 14 est délimitée radialement vers l'extérieur par une paroi 54 latérale externe du palier 10 dans laquelle sont aménagés des perçages axiaux 62 destinés à recevoir des vis d'assemblage du couvercle 20 sur le corps principal 18 ou des tirants de fixation du palier 10 sur l'alternateur. Le couvercle 20 comporte des perçages axiaux 63 correspondants.

La paroi 54 comporte également des passages axiaux 58, auxquels correspondent des passages 59 dans le couvercle 20, qui débouchent de part et d'autre du palier 10 pour permettre le passage des trois fils de phase (non représentés) du bobinage statorique, destinés à être reliés aux moyens de régulation du courant.

La cavité 14 est aussi délimitée radialement vers l'extérieur par une paroi latérale interne 60 qui est agencée autour de l'orifice central 12 du palier 10, et dans laquelle sont aménagés des points de serrage du couvercle 20 sur le corps principal 18.

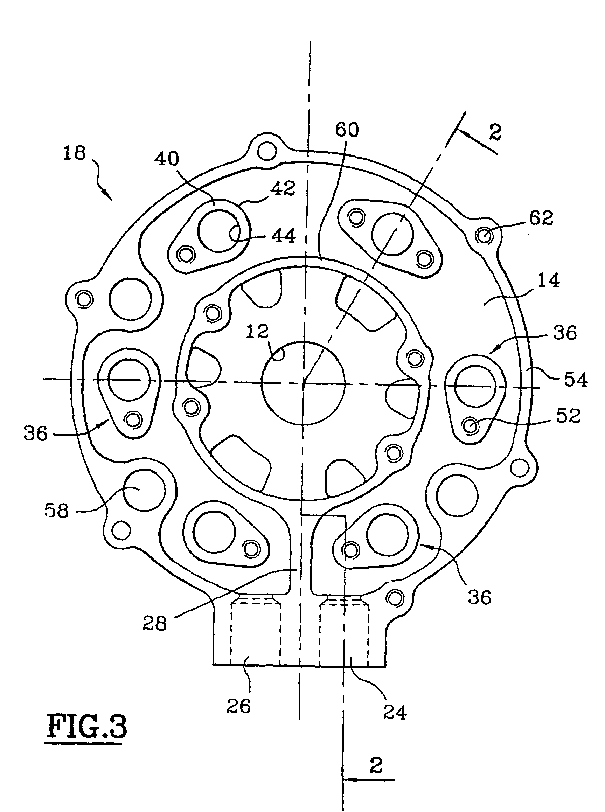

La cavité 14 forme ainsi un canal sensiblement annulaire dont les deux extrémités sont adjacentes et séparées de manière étanche par une cloison 28. L'entrée d'alimentation 24 et la sortie d'évacuation 26 débouchent chacune dans l'une des extrémités de la cavité 14, de part et d'autre de la cloison 28, de telle sorte que le liquide de refroidissement effectue un parcours en sens unique dans la cavité 14, par exemple dans le sens anti-horaire en regardant les figures 1 et 3.

Bien entendu, les rôles de l'entrée d'alimentation 24 et de la sortie d'évacuation 26 peuvent être inversés, ce qui inverse le sens du courant de liquide de refroidissement dans la cavité 14.

Lorsque le palier 10 est monté sur l'alternateur, il est prévu de monter, sur une face externe 30 du couvercle 20, un dissipateur 34 sur lequel sont agencées des diodes positives formant partie d'un pont redresseur du courant alternatif triphasé produit par l'alternateur. Bien entendu, un isolant électrique 32 est interposé entre le dissipateur 34 et le couvercle 20 du palier 10.

De manière connue, d'autres moyens de régulation du courant produit par l'alternateur peuvent être agencés sur le palier, à l'extérieur de l'alternateur. De même, il est possible de disposer, autour de l'orifice central 12 du palier 10, des porte-balais (non représentés) destinés à assurer l'alimentation du rotor du démarreur.

Conformément aux enseignements de l'invention, le palier 10 comporte des cheminées 36 qui traversent axialement la cavité 14 pour déboucher axialement de part et d'autre du palier 10, d'une part dans la face externe 30 du couvercle 20 et d'autre part dans une face interne 38 du corps principal 18 du palier 10.

Chaque cheminée 36 comporte ainsi une paroi tubulaire 40 dont une face externe 42 s'étend à l'intérieur de la cavité 14 de manière à être au contact du liquide de refroidissement. La face interne 44 de la paroi 40 des cheminées 36 délimite un logement sensiblement cylindrique et étagé dans lequel est destiné à être reçu un des composants des moyens de régulation du courant produit par l'alternateur tel qu'une diode négative 46.

La diode 46 qui est représentée à la figure 1 comporte un boîtier principal 48, qui est généralement réalisé en matériau métallique conducteur de l'électricité et qui est en l'occurrence destiné à être relié à la masse électrique, et une broche de raccordement 50 qui s'étend axialement.

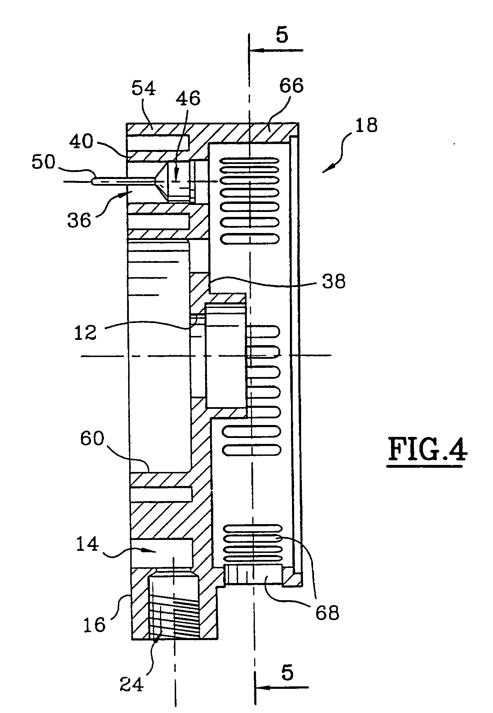

Comme on peut le voir plus particulièrement sur la figure 4, les diodes 46 sont destinées à être engagées axialement de l'intérieur vers l'extérieur dans les cheminées 36 et leur boîtier 48 est alors agencé sensiblement au niveau d'une extrémité axiale interne de la cheminée 36.

Le corps principal 48 qui est sensiblement cylindrique est reçu dans la cheminée 36 de telle manière que sa paroi latérale soit en contact étroit avec la paroi interne 44 de la cheminée 36 pour assurer une bonne conduction à la fois électrique et thermique entre la diode 46 et la cheminée 36.

L'extrémité axiale interne de la cheminée 36 est de diamètre élargi pour s'adapter à la forme exacte de la diode 46 qui, dans cet exemple de réalisation, comporte un épaulement à la base de son boîtier 48.

Au contraire, la broche 50 de la diode 46 s'étend axialement au travers de la cheminée 36 sans en toucher les parois et son extrémité libre dépasse à l'extérieur du palier 10, au travers d'un orifice 51 du couvercle qui forme une extrémité axiale de la cheminée 36, de manière à permettre le raccordement électrique de la diode 50 au reste des composants du pont redresseur du courant.

Comme on peut le voir sur les figures, les parois tubulaires 40 des cheminées 36 ne sont pas cylindriques de révolution et présentent de la sorte des surépaisseurs dans lesquelles il est possible d'aménager des orifices axiaux filetés 52 destinés à recevoir des vis de serrage du couvercle 20 sur le corps principal 18 du palier 10.

On assure ainsi à coup sûr une très bonne étanchéité au niveau des cheminées 36, ce qui évite tout risque d'infiltration de liquide de refroidissement à l'intérieur du logement dans lequel sont agencées les diodes 46.

Comme on peut le voir sur les figures, il est prévu six cheminées qui permettent donc de doubler chacune des trois diodes négatives d'un pont redresseur de conception connue.

Par ailleurs, la paroi radiale externe 54 du corps principal 18 du palier 10 se prolonge axialement vers l'intérieur de l'alternateur au-delà de la face transversale arrière 38 du corps de palier 18 par une jupe axiale 66 dans laquelle sont aménagées des ouïes 68 de ventilation de l'intérieur de l'alternateur, qui peut éventuellement comporter un ventilateur interne agencé à l'extrémité avant du démarreur.

Dans l'exemple de réalisation de l'invention qui est représenté sur les figures, le palier 10 est réalisé en deux parties, un corps principal 18 et un couvercle 20, de manière à permettre la réalisation de la cavité 14. Toutefois, des techniques de moulage utilisant des modèles gazéifiables peuvent permettre de réaliser le palier en une seule pièce, ce qui simplifie l'étanchéification de la cavité 14.

## Revendications

1. Alternateur à refroidissement liquide, du type comportant un carter dont une extrémité axiale est fermée par un palier arrière (10) qui porte des moyens de régulation du courant produit par l'alternateur, et du type dans lequel le palier (10) comporte une cavité interne (14) dans laquelle circule un liquide de refroidissement,
**caractérisé en ce que** le palier (10) comporte au moins une cheminée (36) qui débouche axialement de part et d'autre du palier (10) et qui traverse la cavité interne (14) de telle sorte qu'une face externe (42) d'une paroi latérale (40) de la cheminée (36) est au contact du liquide de refroidissement, et **en ce que** les moyens de régulation comportent au moins un composant (46) qui est agencé à l'intérieur de la cheminée (36).

2. Alternateur selon la revendication 1, **caractérisé en ce que** le composant (46) comporte un boîtier (48) qui est monté au contact d'une face interne (44) de la paroi latérale (40) de la cheminée (36).

3. Alternateur selon la revendication 2, **caractérisé en ce que** le composant (46) est agencé sensiblement au niveau d'une face transversale interne (38) du palier (10), et **en ce qu'**il comporte un élément de raccordement (50) qui s'étend axialement à l'intérieur de la cheminée (36) et qui débouche du côté d'une face transversale externe (30) du palier (10) pour permettre le raccordement du composant (46) aux autres moyens de régulation.

4. Alternateur selon la revendication 3, **caractérisé en ce que** l'extrémité axiale de la cheminée (36) qui débouche dans la face interne (38) du palier (10) est élargie pour recevoir le boîtier (48) du composant (46).

5. Alternateur selon l'une quelconque des revendications précédentes, **caractérisé en ce que** la cavité interne (14) forme un canal dont les deux extrémités forment respectivement l'entrée (24) et la sortie (26) du liquide de refroidissement qui circule dans la cavité (14), et **en ce que** la cheminée (36) est agencée en travers du trajet du liquide dans la cavité (36).

6. Alternateur selon l'une quelconque des revendications précédentes, **caractérisé en ce que** le palier (10) comporte un corps principal (18) dans lequel sont agencés la cavité (14) et la cheminée (36), et un couvercle (20) qui referme la cavité (14) et qui comporte des orifices de passage (51) formant une extrémité axiale de la cheminée.

7. Alternateur selon la revendication 6, **caractérisé en ce que** le couvercle (20) est agencé du côté externe du palier (10) par rapport au carter de l'alternateur.

8. Alternateur selon l'une quelconque des revendications 1 à 5, **caractérisé en ce que** le palier (10) est réalisé en une seule pièce par moulage.

9. Alternateur selon l'une quelconque des revendications précédentes, **caractérisé en ce que** le palier (10) comporte des ouïes (68) qui permettent une circulation d'air entre l'intérieur et l'extérieur de l'alternateur.

## Patentansprüche

1. Wechselstromgenerator mit Flüssigkeitskühlung, der ein Gehäuse umfaßt, von dem ein axiales Ende durch einen hinteren Lagerschild (10) verschlossen ist, der Mittel zur Regelung des durch den Wechselstromgenerator erzeugten Stroms trägt, wobei der hintere Lagerschild (10) einen inneren Hohlraum (14) umfaßt, in dessen Innern eine Kühlflüssigkeit zirkuliert,
**dadurch gekennzeichnet, daß** der Lagerschild (10) wenigstens einen Schacht (36) enthält, der axial beiderseits des Lagerschilds (10) mündet und der durch den inneren Hohlraum (14) hindurchgeht, so **daß** eine Außenfläche (42) einer Seitenwand (16) des Schachts (36) mit der Kühlflüssigkeit in Kontakt kommt, und **daß** die Regelungsmittel wenigstens ein Bauteil (46) umfassen, das im Innern des Schachts (36) angeordnet ist.

2. Wechselstromgenerator nach Anspruch 1, **dadurch gekennzeichnet, daß** das Bauteil (46) ein Gehäuse (48) umfaßt, das in Kontakt mit einer Innenfläche (44) der Seitenwand (40) des Schachts (36) angebracht ist.

3. Wechselstromgenerator nach Anspruch 2, **dadurch gekennzeichnet, daß** das Bauteil (46) in etwa in Höhe einer inneren Querfläche (38) des Lagerschilds (10) angeordnet ist und **daß** es ein Anschlußelement (50) umfaßt, das sich axial im Innern des Schachts (36) erstreckt und das auf der Seite einer äußeren Querfläche (30) des Lagerschilds (10) mündet, um den Anschluß des Bauteils (46) an die anderen Regelungsmittel zu ermöglichen.

4. Wechselstromgenerator nach Anspruch 3, **dadurch gekennzeichnet, daß** das axiale Ende des Schachts (36), das in der Innenfläche (38) des Lagerschilds (10) mündet, erweitert ist, um das Gehäuse (48) des Bauteils (46) aufzunehmen.

5. Wechselstromgenerator nach einem der vorangehenden Ansprüche, **dadurch gekennzeichnet, daß** der innere Hohlraum (14) einen Kanal bildet, dessen zwei Enden den Einlaß (24) bzw. den Auslaß (26) der Kühlflüssigkeit bilden, die im Hohlraum (14) zirkuliert, und **daß** der Schacht (36) durch den Verlauf der Flüssigkeit im Hohlraum (36) hindurch angeordnet ist.

6. Wechselstromgenerator nach einem der vorangehenden Ansprüche, **dadurch gekennzeichnet, daß** der Lagerschild (10) einen Hauptkörper (18), in dem der Hohlraum (14) und der Schacht (36) angeordnet sind, und einen Deckel (20) umfaßt, der den Hohlraum (14) verschließt und der Durchlaßöffnungen (51) enthält, die ein axiales Ende des Schachts bilden.

7. Wechselstromgenerator nach Anspruch 6, **dadurch gekennzeichnet, daß** der Deckel (20), bezogen auf das Gehäuse des Wechselstromgenerators, auf der Außenseite des Lagerschilds (10) angeordnet ist.

8. Wechselstromgenerator nach einem der Ansprüche 1 bis 5, **dadurch gekennzeichnet, daß** der Lagerschild (10) einstückig als Formteil ausgeführt ist.

9. Wechselstromgenerator nach einem der vorangehenden Ansprüche, **dadurch gekennzeichnet, daß** der Lagerschild (10) Schlitze (68) umfaßt, die eine Luftzirkulation zwischen dem Innern und dem Äußeren des Wechselstromgenerators ermöglichen.

## Claims

1. A liquid-cooled alternator, of the type comprising a casing, one axial end of which is closed by a rear bearing (10) which carries means for regulating current produced by the alternator, and of the type in which the bearing (10) has an.internal cavity (14) in which a coolant liquid flows,
**characterised in that** the bearing (10) includes at least one through passage (36) which is open axially on each side of the bearing (10), and which extends through the internal cavity (14) in such a way that an outer face (42) of a side wall (40) of the through passage (36) is in contact with the coolant liquid, and **in that** the regulating means include at least one component (46) which is located inside the through passage (36).

2. An alternator according to Claim 1, **characterised in that** the component (46) comprises a housing (48) which is mounted in contact with an inner face (44) of the side wall (40) of the through passage (36).

3. An alternator according to Claim 2, **characterised in that** the component (46) is disposed substantially at the level of a transverse inner face (38) of the bearing (10), and **in that** it includes a connecting element (50) which extends axially inside the through passage (36) and which projects on the same side of the bearing (10) as a transverse outer face (30), so as to enable the component (46) to be connected to the other regulating means.

4. An alternator according to Claim 3, **characterised in that** the axial end of the through passage (36) which is open in the inner face (38) of the bearing (10) is widened so as to receive the housing (48) of the component (46).

5. An alternator according to any one of the preceding Claims, **characterised in that** the internal cavity (14) constitutes a duct the two ends of which constitute, respectively, the inlet (24) and the outlet (26) for the coolant liquid that flows in the cavity (14), and **in that** the through passage (36) traverses the path of the liquid in the cavity (36).

6. An alternator according to any one of the preceding Claims, **characterised in that** the bearing (10) comprises a main body (18) in which the cavity (14) and through passage (36) are formed, together with a cover plate (20) which closes off the cavity (14) and which has passage holes (51) that constitute an axial end of the through passage.

7. An alternator according to Claim 6, **characterised in that** the cover plate (20) is arranged on the side of the bearing (10) which is on the outside with reference to the casing of the alternator.

8. An alternator according to any one of Claims 1 to 5, **characterised in that** the bearing (10) is formed in one piece by moulding.

9. An alternator according to any one of the preceding Claims, **characterised in that** the bearing (10) has vent holes (68) which enable air to flow between the inside and outside of the alternator.
